# EUROPÄISCHE PATENTANMELDUNG

(11) **EP 4 186 938 A1**
(43) Veröffentlichungstag der Anmeldung: **31.05.2023**
(21) Anmeldenummer: 21210525.8
(22) Anmeldetag: 25.11.2021
(51) Int. Cl.: C08G 59/22, C08G 59/24, C08G 59/62, C09D 163/00, C08G 59/50

(54) **EPOXIDHARZ-ZUSAMMENSETZUNG MIT EINSTELLBARER AUSHÄRTUNGSGESCHWINDIGKEIT BEI UNTERSCHIEDLICHEN TEMPERATUREN**

(71) Anmelder: Sika Technology AG, 6340 Baar (CH)
(72) Erfinder: VIAS PARRADO, Ana, 70469 Stuttgart (DE); SARIOGLU, Oguz, 74080 Heilbronn (DE); LAUBER, Lina, 71549 Auenwald (DE); GRÖTZINGER, Jochen, 73525 Schwäbisch Gmünd (DE); PUSEL, Thomas, 71282 Hemmingen (DE); BYRNE, Michael, Lytham, FY8 2TF (GB)
(74) Vertreter: Sika Patent Attorneys

(57) **Zusammenfassung**

Die vorliegende Erfindung betrifft Epoxidharz-Zusammensetzungen umfassend mindestens ein Epoxid-Flüssigharz **EF**, mindestens einen Aminhärter **AM** 1.0 - 6.0 Gew.-%, bezogen auf das Gesamtgewicht der Epoxidharz-Zusammensetzung, von mindestens einem tertiären Amin **tAM** der Formel (I), wobei R1 für eine Alkylengruppe mit 1 - 20 C-Atomen, welche gegebenenfalls substituiert ist und gegebenenfalls Hetereoatome aufweist, steht und n für einen Wert von 1 - 3 steht, sowie 1.0 - 6.0 Gew.-% Wasser, bezogen auf das Gesamtgewicht der Epoxidharz-Zusammensetzung. Die vorliegende Erfindung ermöglicht Bodenbeschichtungsprodukte, die ausreichend lange verarbeitbar sind, sehr schnell aushärten und eine harte Oberfläche von hoher Qualität aufweisen, insbesondere bei Verwendung unter feuchtkalten Bedingungen wie beispielsweise 8°C und 80% relative Feuchte.

## Beschreibung

### Technisches Gebiet

Die Erfindung betrifft das Gebiet der kalthärtenden Epoxidharz-Zusammensetzungen für Bodenbeschichtungen, insbesondere für Deckbeläge und Grundierungen.

### Stand der Technik

Bodenbeschichtungsprodukte auf Epoxidharz-Basis sind im Bauwesen weit verbreitet. Sie bestehen aus flüssigen Harz- und Härterkomponenten, welche vor der Applikation gemischt werden und dann bei Umgebungstemperaturen im Bereich von ca. 5 bis 35°C zur festen Beschichtung ausreagieren.

Erwähnte Bodenbeschichtungsprodukte sollen je nach Temperatur sowohl bei höheren als auch bei tieferen Temperaturen rasch aushärten aber dennoch eine genügend lange Offenzeit haben, dass ausreichend Zeit für die Applikation durch die Verarbeiter der Produkte verbleibt. Beschleuniger wie Phenole sind bekannt, sind aber geruchsintensiv und toxikologisch nicht unbedenklich. Als Beschleuniger können auch Säuren wie Salicylsäure oder p-Toluolsulfonsäure eingesetzt werden. Diese erhöhen die Viskosität aber stark und führen teilweise zu verstärkter Vergilbung.

### Darstellung der Erfindung

Aufgabe der vorliegenden Erfindung ist es daher, ein für Bodenbeschichtungszwecke geeignetes System basierend auf einer Epoxidharz-Zusammensetzung zur Verfügung zu stellen, das sowohl bei warmen als auch bei feuchtkalten Bedingungen schnell und ohne Oberflächenstörungen aushärtet und dabei vorzugsweise mechanisch hochwertige Beschichtungen mit fehlerfreier Oberfläche ergibt.

Diese Aufgabe wird mit der Epoxidharz-Zusammensetzung wie in Anspruch 1 beschrieben gelöst sowie dem Verfahren gemäss Anspruch 14.

Die vorliegende Erfindung ermöglicht Bodenbeschichtungsprodukte, die ausreichend lange verarbeitbar sind, sehr schnell aushärten und eine harte Oberfläche von hoher Qualität aufweisen, insbesondere bei Verwendung unter feuchtkalten Bedingungen wie beispielsweise 8°C und 80% relative Feuchte. Diese Produkte sind damit ganz besonders geeignet als Bodenbeschichtung, insbesondere als Deckbelag (Top Coat) bzw. Versiegelung und als Grundierung, wo für ersteres hohen Anforderungen an die Verarbeitbarkeit und die Ästhetik wichtig sind und für letzteres aus hohe Anforderungen an die Verarbeitbarkeit gelten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Epoxidharz-Zusammensetzung umfassend:
- mindestens ein Epoxid-Flüssigharz **EF**;
- mindestens einen Am inhärter **AM;**
- 1.0 - 6.0 Gew.-%, bezogen auf das Gesamtgewicht der Epoxidharz-Zusammensetzung, von mindestens einem tertiären Amin **tAM** der Formel 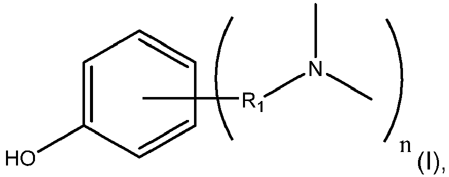 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
- 1.0 - 6.0 Gew.-% Wasser, bezogen auf das Gesamtgewicht der Epoxidharz-Zusammensetzung.

Als "Epoxid-Flüssigharz" wird ein technisches Polyepoxid mit einer Glasübergangstemperatur unterhalb von 25°C bezeichnet.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxid-Polymer eingebunden wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in der Beschreibung bzw. den Ausführungsbeispielen beschrieben bestimmt wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23°C bezeichnet.

Ein geeignetes Epoxid-Flüssigharz **EF** wird auf bekannte Art und Weise erhalten, insbesondere aus der Oxidation der entsprechenden Olefine oder aus der Reaktion von Epichlorhydrin mit den entsprechenden Polyolen, Polyphenolen oder Aminen.

Geeignete Epoxid-Flüssigharze **EF** sind insbesondere aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze **EF** sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Besonders bevorzugte Epoxid-Flüssigharze **EF** weisen die Formel (A) auf

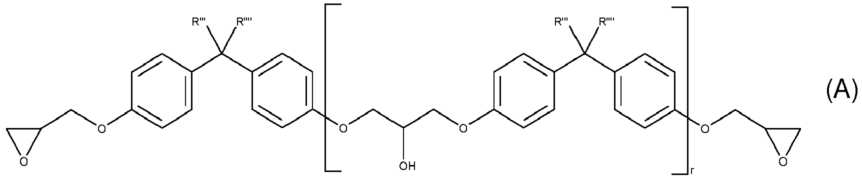

Hierbei stehen die Substituenten R‴ und R‴′ unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite^{®} GY 250, Araldite^{®} PY 304, Araldite^{®} GY 282 (Huntsman, bzw. Hexion) oder D.E.R.^{™} 331 oder D.E.R.^{™} 330 (Dow) oder Epikote 828 (Hexion) erhältlich.

Die Epoxidharz-Zusammensetzung weist mindestens einen Aminhärter **AM** auf.

Geeignete Aminhärter **AM** sind
- aliphatische, cycloaliphatische oder arylaliphatische primäre Di- oder Triamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol,
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, insbesondere Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000 (alle von Huntsman), oder entsprechende Amine von BASF oder Nitroil;
- sekundäre Aminogruppen aufweisende Polyamine, wie insbesondere 2-Aminoethylpiperazin, 3-Dimethylaminopropylamin (DMAPA), 3-(3-(Dimethylami-no)propylamino)propylamin (DMAPAPA), Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, Produkte aus der reduktiven Alkylierung von primären Polyaminen mit Aldehyden oder Ketonen, insbesondere N-Benzyl-1,2-ethandiamin, N,N'-Dibenzyl-1,2-ethandiamin, N-Benzyl-1,2-propandiamin, N-Benzyl-1,3-bis(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, N-Benzyldiethylentriamin, N,N'-Dibenzyldiethylentriamin, N-Benzyltriethylentetramin, N,N'-Dibenzyltriethylentetramin, N"-Benzyl-N,N'-bis(3-aminopropyl)ethylendiamin, Nʺ,N‴-Dibenzyl-N,N′-bis(3-aminopropyl)ethylendiamin, oder partiell styrolisierte Polyamine wie zum Beispiel styrolisiertes MXDA enthaltend N-Phenylethyl-1,3-bis(aminomethyl)benzol (erhältlich als Gaskamine^{®} 240 von Mitsubishi Gas Chemical);
- Bis(aminomethyl)cyclohexan; oder
- Addukte von Bis(aminomethyl)cyclohexan oder der obengenannten oder weiterer Polyamine mit Epoxiden oder Epoxidharzen, insbesondere Addukte mit Diepoxiden oder Monoepoxiden.

Vorzugsweise ist der mindestens eine Aminhärter **AM** ausgewählt aus der Liste bestehend aus:
- aliphatische, cycloaliphatische oder arylaliphatische primäre Di- oder Triamine,
- sekundäre Aminogruppen aufweisende Polyamine,
- Bis(aminomethyl)cyclohexan und
- Addukte von diesen Aminen mit Epoxiden oder Epoxidharzen, insbesondere Addukte mit Diepoxiden oder Monoepoxiden.

Besonders bevorzugt enthält der Aminhärter **AM** Bis(aminomethyl)cyclohexan. Als Bis(aminomethyl)cyclohexan geeignet ist 1,2-Bis(aminomethyl)cyclohexan, 1,3-Bis(aminomethyl)cyclohexan oder 1,4-Bis(aminomethyl)cyclohexan oder Mischungen davon. Bevorzugt ist 1,3-Bis(aminomethyl)cyclohexan oder 1,4-Bis(aminomethyl)cyclohexan oder Mischungen davon. Besonders bevorzugt ist 1,3-Bis(aminomethyl)cyclohexan. Es wird insbesondere hergestellt aus 1,3-Bis(aminomethyl)benzol (MXDA) mittels Hydrierung und ist kommerziell erhältlich, beispielsweise von Mitsubishi Gas Chemical.

Am meisten bevorzugt besteht der Aminhärter **AM** aus einer Mischung von Aminhärtern ausgewählt aus der Liste
- aliphatische, cycloaliphatische oder arylaliphatische primäre Di- oder Triamine,
- sekundäre Aminogruppen aufweisende Polyamine,
- Bis(aminomethyl)cyclohexan und
- Addukte von diesen Aminen mit Epoxiden oder Epoxidharzen, insbesondere Addukte mit Diepoxiden oder Monoepoxiden, wobei Bis(aminomethyl)cyclohexan in einer Menge von 10 - 50 Gew.-%, insbesondere 20 - 40 Gew.-%, vorzugsweise 25 - 35 Gew.-%, enthalten ist, bezogen auf das Gesamtgewicht des Aminhärters **AM.**

In einer bevorzugten Ausführungsform enthält der Aminhärter **AM** mehr als 45 %, insbesondere mehr als 60 %, vorzugsweise mehr als 80 %, am meisten bevorzugt mehr als 90 % der Aminwasserstoffe der Epoxidharz-Zusammensetzung.

Die Epoxidharz-Zusammensetzung enthält 1.0 - 6.0 Gew.-%, bezogen auf das Gesamtgewicht der Epoxidharz-Zusammensetzung, von mindestens einem tertiären Amin **tAM** der Formel 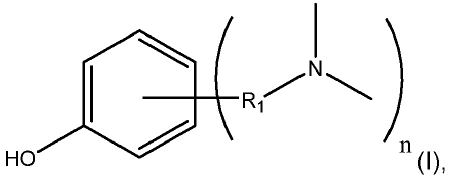 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht.

Vorzugsweise beträgt der Anteil von dem tertiären Amin **tAM** der Formel (I) 3.5 - 6.0 Gew.-%, insbesondere 4.5 - 5.5 Gew.-%, bevorzugt 4.75 - 5.25 Gew.-%, bezogen auf das Gesamtgewicht der Epoxidharz-Zusammensetzung.

Überraschenderweise wurde gefunden, dass diese Mengenbereiche bei tieferen Temperaturen wie 8° C zu einer hohen Beschleunigung der Shore-D Härteentwicklung führen, insbesondere in den frühen Phasen der Härteentwicklung. Dies ist beispielsweise in der Tabelle 8 im Vergleich von Ex.50 bis Ex.52 mit Ex.46-Ex.49, respektive mit Ex.53-Ex.54 ersichtlich.

Vorzugsweise ist das das tertiäre Amin **tAM** ausgewählt aus der Gruppe bestehend aus 2-(Dimethylaminomethyl)phenol, 2,6-Bis(Dimethylaminomethyl)phenol, 2,4-Bis(Dimethylaminomethyl)phenol, 2,4,6-Tris(Dimethylaminomethyl)phenol und 2,4,6-tris(((3-(dimethylamino)propyl)amino)methyl)phenol, insbesondere 2,4,6-tris(((3-(dimethylamino)propyl)amino)methyl)phenol und 2,4,6-Tris(Dimethylaminomethyl)phenol. Am meisten bevorzugt ist das tertiäre Amin **tAM** eine Mischung von 2,4,6-tris(((3-(dimethylamino)propyl)amino)methyl)phenol und 2,4,6-Tris(Dimethylam inomethyl)phenol.

Eine solche Mischung von 2,4,6-tris(((3-(dimethylamino)propyl)amino)methyl)phenol und 2,4,6-Tris(Dimethylaminomethyl)phenol ist beispielsweise kommerziell erhältlich als Ancamine K54 von Evonik.

Die Epoxidharz-Zusammensetzung enthält 1.0 - 6.0 Gew.-% Wasser, bezogen auf das Gesamtgewicht der Epoxidharz-Zusammensetzung. Vorzugsweise beträgt der Anteil von Wasser 1.0 - 3.5 Gew.-%, insbesondere 1.25 - 2.5 Gew.-%, bevorzugt 1.5 - 2.25 Gew.-%, bezogen auf das Gesamtgewicht der Epoxidharz-Zusammensetzung.

Überraschenderweise wurde gefunden, dass diese Mengenbereiche bei tieferen Temperaturen wie 8° C zu einer hohen Beschleunigung der Shore-D Härteentwicklung führen, insbesondere in den frühen Phasen der Härteentwicklung. Dies ist beispielsweise in der Tabelle 8 im Vergleich von Ex.50 bis Ex.52 mit Ex.46-Ex.49, respektive mit Ex.53-Ex.54 ersichtlich.

Weiter wurde überraschenderweise gefunden, dass es vorteilhaft ist, wenn das Gewichtsverhältnis von tertiären Amin **tAM** der Formel (I) zu Wasser (**tAM** / Wasser) von 0.5 - 4, vorzugsweise von 1 - 3, insbesondere von 2 - 3, beträgt. Überraschenderweise wurde gefunden, dass diese Mengenbereiche bei tieferen Temperaturen wie 8° C zu einer hohen Beschleunigung der Shore-D Härteentwicklung führen, insbesondere in den frühen Phasen der Härteentwicklung. Dies ist beispielsweise in der Tabelle 8 im Vergleich von Ex.50 bis Ex.52 mit Ex.46-Ex.49, respektive mit Ex.53-Ex.54 ersichtlich.

Auch ist es von Vorteil, wenn das Gesamtgewicht der Summe vom tertiärem Amin **tAM** der Formel (I) und Wasser (**tAM** + Wasser) von 3.5 - 8.0 Gew.-%, insbesondere 4.5 - 7.25 Gew.-%, bevorzugt 5.5 - 6.75 Gew.-%, beträgt, bezogen auf das Gesamtgewicht der Epoxidharz-Zusammensetzung.

Es wurde überraschenderweise gefunden, dass bei tieferen Temperaturen wie 8° C eine hohe Beschleunigung der Shore-D Härteentwicklung und gleichzeitig eine hohe Oberflächenqualität bei geringer Schrumpfneigung der ausgehärteten Zusammensetzung erreicht wird. Dies ist beispielsweise in der Tabelle 4 im Vergleich von Ex.13 mit Ex.8-Ex.12, respektive mit Ex.14-Ex.17 ersichtlich.

Die Epoxidharz-Zusammensetzung kann zusätzlich weitere Bestandteile enthalten. Bevorzugt enthält sie mindestens einen weiteren Bestandteil ausgewählt aus Epoxidgruppen-haltigen Reaktivverdünnern, weiteren Polyaminen, Beschleunigern, Verdünnern und Füllstoffen.

Vorzugsweise weist die Epoxidharz-Zusammensetzung zusätzlich 2 - 15 Gew.-%, vorzugsweise 5 - 10 Gew.-%, insbesondere 6 - 8 Gew.-%, bezogen auf das Gesamtgewicht der Epoxidharz-Zusammensetzung, von mindestens einem Epoxidgruppen-haltigen Reaktivverdünner auf.

Bevorzugte Epoxidgruppen-haltige Reaktivverdünner sind insbesondere Glycidylether von ein- oder mehrwertigen Phenolen oder aliphatischen oder cycloaliphatischen Alkoholen, wie insbesondere die bereits genannten Glycidylether von zwei oder merhwertigen Alkoholen, oder Monoglycidylether wie insbesondere Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Vorzugsweise weist die Epoxidharz-Zusammensetzung zusätzlich 2 - 15 Gew.-%, vorzugsweise 5 - 10 Gew.-%, insbesondere 6 - 8 Gew.-%, bezogen auf das Gesamtgewicht der Epoxidharz-Zusammensetzung, von mindestens einem Epoxidgruppen-haltigen Reaktivverdünner auf.

Vorzugsweise weist die Epoxidharz-Zusammensetzung zusätzlich weniger als 10 Gew.-% von einem Verdünner auf, insbesondere weniger als 7.5 Gew.-%, bevorzugt weniger als 5 Gew.-%, bezogen auf das Gesamtgewicht der Epoxidharz-Zusammensetzung.

Dies ist dahingehend von Vorteil, dass dadurch schneller ausreichende Shore-D werte erhalten werden. Dies ist beispielsweise in der Tabelle 6 im Vergleich von Ex.33 mit Ex.34 - Ex.36 ersichtlich.

Geeignete Verdünner sind insbesondere 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11,14-Pen-tadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor-oder Sulfonsäureester oder Sulfonamide.

Bevorzugte Verdünner sind ausgewählt aus der Liste bestehend aus Benzylalkohol, 2-Phenoxyethanol, Cardanol, styrolisiertes Phenol, Diisopropylnaphthalin und phenolgruppenhaltige aromatische Kohlenwasserstoffharze. Besonders bevorzugt ausgewählt aus der Liste bestehend aus Benzylalkohol, Diisopropylnaphthalin und Cardanol, insbesondere Diisopropylnaphthalin.

Vorzugsweise weist die Epoxidharz-Zusammensetzung zusätzlich 20 - 50 Gew.-%, vorzugsweise 30 - 45 Gew.-%, insbesondere 35 - 40 Gew.-%, bezogen auf das Gesamtgewicht der Epoxidharz-Zusammensetzung, von mindestens einem Füllstoff auf.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt ist Calciumcarbonat, Quarzmehl und Quarzsand.

Gegebenenfalls enthält die Epoxidharz-Zusammensetzung weitere Hilfs- und Zusatzstoffe, insbesondere die Folgenden:
- weitere Amine, insbesondere Monoamine wie insbesondere Benzylamin oder Furfurylamin oder aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamidmodifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)phosphat, Tris(dichloroisopropyl)phosphat, Tris[3-bromo-2,2-bis(bromomethyl)propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere Netzmittel, Verlaufmittel, Entschäumer, Entlüfter, Stabilisatoren gegen Oxidation, Wärme, Licht oder UV-Strahlung oder Biozide.

Bevorzugt enthält die Epoxidharz-Zusammensetzung nur einen geringen Gehalt an hochsiedenen Verdünnern. Bevorzugt enthält sie weniger als 5 Gewichts-%, besonders bevorzugt weniger als 2 Gewichts-%, insbesondere weniger als 1 Gewichts-%, am meisten bevorzugt weniger als 0.5 Gewichts-%, Verdünner mit einem Siedepunkt von mindestens 200°C.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.7 bis 1.2, insbesondere 0.8 bis 1.0, insbesondere bevorzugt 0.90 bis 0.98. Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Ein weiterer Gegenstand der Erfindung ist somit eine ausgehärtete Zusammensetzung erhalten aus der Aushärtung der Epoxidharz-Zusammensetzung wie vorgehend beschrieben.

Zur Anwendung der Epoxidharz-Zusammensetzung werden die Komponenten kurz vor oder während der Applikation miteinander vermischt.

Die Vermischung der Komponenten erfolgt mittels eines geeigneten Verfahrens; sie kann kontinuierlich oder batchweise erfolgen. Die Vermischung erfolgt insbesondere bei Temperaturen, welche typischerweise im Bereich von 5 bis 50°C, bevorzugt 5 bis 30°C, insbesondere 5 bis 15°C liegt.

Mit der Vermischung der beiden Komponenten beginnt die Aushärtung durch chemische Reaktion. Dabei reagieren die in der Epoxidharz-Zusammensetzung vorhandenen Aminwasserstoffe und gegebenenfalls vorhandene weitere gegenüber Epoxidgruppen reaktive Gruppen mit den Epoxidgruppen, wie vorgängig beschrieben.

Die Aushärtung erfolgt typischerweise bei einer Temperatur im Bereich von 5 bis 50°C, bevorzugt 5 bis 30°C, insbesondere 5 bis 15°C, und erstreckt sich vorzugsweise über 2.5 - 12 Stunden, insbesondere 3 - 10 Stunden, insbesondere 5 - 8 Stunden.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips, Asphalt oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Epoxidharz-Zusammensetzung vorbehandelt werden.

Die beschriebene Epoxidharz-Zusammensetzung ist vorteilhaft verwendbar als Belag, Beschichtung, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks oder Brücken.

Bevorzugt wird die beschriebene Epoxidharz-Zusammensetzung verwendet als Bodenbeschichtung, insbesondere in Innenräumen wie Büros, Industriehallen, Turnhallen oder Kühlräume, oder im Aussenbereich für Balkone, Terrassen, Parkdecks oder Brücken. Besonders bevorzugt wird sie verwendet als Deckbelag (Top Coat) oder Versiegelung, wo die Oberflächenqualität besonders wichtig ist oder als Grundierung.

Für die Verwendung als Bodenbeschichtung wird die Epoxidharz-Zusammensetzung insbesondere als selbstverlaufende oder leicht thixotropierte Beschichtung auf überwiegend ebene Flächen appliziert. Sie weist dabei bevorzugt eine flüssige Konsistenz mit niedriger Viskosität und guten Verlaufseigenschaften auf. Bevorzugt weist sie unmittelbar nach dem Vermischen eine Viskosität, gemessen bei 20°C, im Bereich von 0.2 bis 4 Pa·s, besonders bevorzugt 0.3 bis 2 Pa·s, insbesondere 0.3 bis 1.5 Pa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Temperaturen im Bereich von 5 bis 50°C, bevorzugt 5 bis 30°C, insbesondere 5 bis 15°C. Die Applikation erfolgt insbesondere durch Aufgiessen auf das zu beschichtende Substrat und anschliessendem gleichmässigem Verteilen mit beispielsweise einem Rakel oder einer Zahntraufel. Die Applikation kann auch mit einem Pinsel oder Roller oder als Spritzapplikation erfolgen.

Die Bodenbeschichtung ist insbesondere Bestandteil eines Bodenbelages umfassend
- gegebenenfalls eine Grundierung,
- gegebenenfalls eine Egalisierungsschicht,
- eine oder mehrere Lagen einer Basisschicht, auch Verschleissschicht genannt, welche gegebenenfalls mit Quarzsand abgestreut ist,
- und gegebenenfalls eine Versiegelung (Top Coat).

Die erfindungsgemässe Epoxidharz-Zusammensetzung kann dabei die Grundierung und/oder die Egalisierungsschicht und/oder die Basisschicht und/oder die Versiegelung des Bodenbelags darstellen. Bei weiteren, nicht der erfindungsgemässen Epoxidharz-Zusammensetzung entsprechenden Schichten kann es sich ebenfalls um Epoxidharz-Zusammensetzungen handeln, oder um ein anderes Material, insbesondere eine Polyurethan- oder Polyharnstoff-Beschichtung.

Als Grundierung kann die erfindungsgemässe Epoxidharz-Zusammensetztung weitgehend frei von Füllstoffen sein. Eine Grundierung wird aufgetragen, um den Untergrund zu benetzen, Staub und Schmutz zu binden, die Poren zu verschliessen und/oder den Untergrund zu egalisieren. Eine Grundierung wird in knapp deckender bis deckender Menge auf den Untergrund, insbesondere Beton, Mörtel, Gips oder Asphalt, appliziert.

Als Egalisierungsschicht enthält die erfindungsgemässe Epoxidharz-Zusammensetztung typischerweise Füllstoffen. Eine Egalisierungsschicht wird aufgetragen, um in einem sehr unebenen Untergrund Löcher und Vertiefungen zu füllen, sodass schliesslich eine weitgehend ebene Fläche für das Auftragen der Basisschicht zur Verfügung steht.

Als Basisschicht enthält die erfindungsgemässe Epoxidharz-Zusammensetztung typischerweise Füllstoffe. Die Basisschicht wird bevorzugt in einer Schichtdicke im Bereich von 0.5 bis 5 mm aufgetragen, gegebenenfalls in zwei oder mehr Arbeitsgängen, wobei die letzte Schicht gegebenenfalls mit Quarzsand abgestreut wird.

Als Versiegelung wird die erfindungsgemässe Epoxidharz-Zusammensetzung bevorzugt mittels Rolle in einer Schichtdicke im Bereich von 0.1 bis 1 mm, insbesondere 0.2 bis 0.5 mm, aufgetragen. Sie kann als transparente Versiegelung weitgehend ohne Füllstoffe oder in gefüllter und pigmentierter Form verwendet werden.

Aus der Verwendung der Epoxidharz-Zusammensetzung entsteht ein Artikel.

Ein weiterer Gegenstand der Erfindung ist somit ein Artikel umfassend die ausgehärtete Zusammensetzung, erhalten aus der beschriebenen Verwendung.

Die erfindungsgemässe Epoxidharz-Zusammensetzung ist ausgezeichnet verarbeitbar, härtet sehr schnell aus und verfügt über eine harte, glänzende Oberfläche von hoher Qualität, insbesondere bei Aushärtung unter feuchtkalten Bedingungen wie beispielsweise 8 °C und 80 % relativer Feuchte. Die erfindungsgemässe Epoxidharz-Zusammensetzung ist besonders geeignet für die Verwendung als Bodenbeschichtung, insbesondere als Deckbelag (Top Coat) bzw. Versiegelung, wo hohe Anforderungen an die Verarbeitbarkeit und die Ästhetik bestehen oder als Grundierung, wo auch hohe Anforderungen an Verarbeitbarkeit bestehen.

Ein weiterer Gegenstand der Erfindung ist ein Verfahren umfassend die Schritte
a) Bereitstellen einer zweikomponentigen Epoxidharz-Zusammensetzung bestehend aus
   - einer Harz-Komponente **A** enthaltend mindestens ein Epoxid-Flüssigharz **EF,** und
   - einer Härter-Komponente **B** enthaltend mindestens einen Aminhärter **AM** sowie 0.5 - 2 Gew.-%, bezogen auf das Gesamtgewicht der Epoxidharz-Zusammensetzung, von mindestens einem tertiären Amin **tAM** der Formel 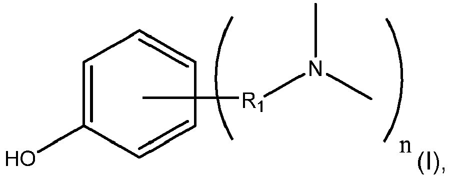
      wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
      wobei die zweikomponentige Epoxidharz-Zusammensetzung weiter 0.75 - 3 Gew.-% Wasser, bezogen auf das Gesamtgewicht der zweikomponentige Epoxidharz-Zusammensetzung, aufweist und wobei die Harz-Komponente **A** und die Härter-Komponente **B** getrennt voneinander vorliegen;
b) Mischen der Harz-Komponente **A** und der Härter-Komponente **B** der zweikomponentigen Epoxidharz-Zusammensetzung unter Zugabe von einer Komponente C enthaltend mindestens ein tertiäres Amin **tAM** der Formel (I) und gegebenenfalls Wasser,
   wobei die Summe des mit der Komponente **C** zugegebenen und des in der zweikomponentigen Epoxidharz-Zusammensetzung bereits enthaltenen tertiären Amins **tAM** 1 - 6 Gew.-%, bezogen auf das Gesamtgewicht der erhaltenen Epoxidharz-Zusammensetzung, beträgt; und wobei die Summe des mit der Komponente C gegebenenfalls zugegebenen und des in der zweikomponentigen Epoxidharz-Zusammensetzung bereits enthaltenen Wassers 1 - 6 Gew.-%, bezogen auf das Gesamtgewicht der erhaltenen Epoxidharz-Zusammensetzung, beträgt; und
c) Applizieren der erhaltenen Epoxidharz-Zusammensetzung bei einer Temperatur von 18 - 0 °C, insbesondere 12 - 4 °C, bevorzugt 10 - 6 °C, auf einen Untergrund.

Daher umfasst die vorliegende Erfindung in einem weiteren Aspekt auch die erwähnte zweikomponentige Epoxidharz-Zusammensetzung. Es ist bevorzugt, dass die zweikomponentige Epoxidharz-Zusammensetzung 0.6 - 1.8 Gew.-%, insbesondere 0.8 - 1.6 Gew.-%, bevorzugt 1.0 - 1.4 Gew.-%, von mindestens einem tertiären Amin **tAM** der Formel (I) aufweist, bezogen auf das Gesamtgewicht der zweikomponentigen Epoxidharz-Zusammensetzung. Weiter ist es vorteilhaft, dass die zweikomponentige Epoxidharz-Zusammensetzung 1.2 - 2.4 Gew.-%, insbesondere 1.4 - 2.2 Gew.-%, bevorzugt 1.6 - 2.0 Gew.-%, Wasser aufweist, bezogen auf das Gesamtgewicht der zweikomponentigen Epoxidharz-Zusammensetzung. Diese Mengenbereiche führen bei Raumtemperatur zu einer hohen Beschleunigung der Shore-D Härteentwicklung führen und gleichzeitig zu einer ausreichenden Offenzeit für die Applikation führen. Dies ist beispielsweise in der Tabelle 5 im Vergleich von Ex.23-25 mit Ex.18-Ex.22, respektive mit Ex.26-Ex.32 ersichtlich. Weiter ist das ersichtlich in der Tabelle 7 im Vergleich von Ex.40-41 mit Ex.37-Ex.39, respektive mit Ex.42-Ex.45.

Als Epoxid-Flüssigharz **EF,** Aminhärter **AM** sowie tertiäres Amin **tAM** der Formel (I) sind dieselben Ausführungsformen bevorzugt, die bereits vorgehend als bevorzugte Ausführungsformen ausgewiesen wurden.

Das vorgehend erwähnte erfindungsgemässe Verfahren erlaubt die Anpassung der erwähnten zweikomponentigen Epoxidharz-Zusammensetzung, welche überraschenderweise bei Raumtemperatur zu einer hohen Beschleunigung der Shore-D Härteentwicklung führen und gleichzeitig zu einer ausreichenden Offenzeit für die Applikation führt, an feuchtkalten Bedingungen bei 8°C und 80% relative Feuchte. Durch die Schritte b) und c) wurde überraschenderweise gefunden, dass bei tieferen Temperaturen wie 8° C eine hohe Beschleunigung der Shore-D Härteentwicklung und gleichzeitig eine hohe Oberflächenqualität bei geringer Schrumpfneigung der ausgehärteten Zusammensetzung erreicht wird. Dies ist beispielsweise in der Tabelle 4 im Vergleich von Ex.11 mit Ex.8-Ex.10, respektive mit Ex.12-Ex.17 ersichtlich.

Vorzugsweise erfolgt die Applikation der erhaltenen Epoxidharz-Zusammensetzung auf einen Untergrund wie vorgehend für die Epoxidharz-Zusammensetzung beschrieben. Auch die vorgehend ausgeführten Verwendungen, insbesondere als Bodenbeschichtung, sind für die erhaltene Epoxidharz-Zusammensetzung bevorzugt. Die als bevorzugt ausgeführten Ausführungsformen, insbesondere in Bezug der enthaltenen Bestandteile und deren bevorzugte Arten und Mengen, der vorgehend beschriebenen Epoxidharz-Zusammensetzung der Ansprüche 1 - 10 gelten hierbei auch die in Schritt c) erhaltene Epoxidharz-Zusammensetzung.

Die vorliegende Erfindung umfasst in einem letzten Aspekt auch eine Epoxidharz-Zusammensetzung bestehend aus drei voneinander getrennt vorliegenden Komponenten, bestehend aus
- einer Harz-Komponente **A** enthaltend mindestens ein Epoxid-Flüssigharz **EF,** und
- einer Härter-Komponente **B** enthaltend mindestens einen Aminhärter **AM** sowie 0.5 - 2 Gew.-%, bezogen auf das Gesamtgewicht der Epoxidharz-Zusammensetzung, von mindestens einem tertiären Amin **tAM** der Formel 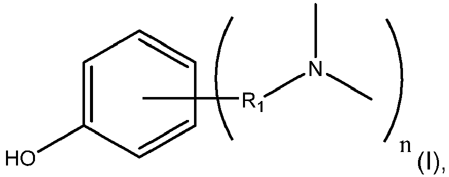 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
- einer Komponente C enthaltend mindestens ein tertiäres Amin **tAM** der Formel (I) und gegebenenfalls Wasser;
   wobei die Summe des in den Komponenten **A, B** und **C** enthaltenen tertiären Amins **tAM** 1 - 6 Gew.-%, bezogen auf das Gesamtgewicht der Summe der Komponenten **A, B** und **C**, beträgt;
   und wobei die Summe des in den Komponenten **A, B** und **C** enthaltenen Wassers 1 - 6 Gew.-%, bezogen auf das Gesamtgewicht der Summe der Komponenten **A, B** und **C**, beträgt.

Es ist bevorzugt, dass die Härter-Komponente **B** 0.8 - 1.6 Gew.-%, bevorzugt 1.0 - 1.4 Gew.-%, von dem mindestens einen tertiären Amin **tAM** der Formel (I) aufweist, bezogen auf das Gesamtgewicht der Härter-Komponente **B,** und dass die Härter-Komponente **B** weiter 1.4 - 2.2 Gew.-%, bevorzugt 1.6 - 2.0 Gew.-%, Wasser aufweist, bezogen auf das Gesamtgewicht der Härter-Komponente **B**.

Weiter ist es vorteilhaft, dass die Summe des in den Komponenten **A, B** und **C** enthaltenen tertiären Amins **tAM** der Formel (I) 4.5 - 5.5 Gew.-%, bevorzugt 4.75 - 5.25 Gew.-%, bezogen auf das Gesamtgewicht der Summe der Komponenten **A, B** und C, beträgt; und die Summe des in den Komponenten **A, B** und **C** enthaltenen Wassers 1.25 - 2.5 Gew.-%, bevorzugt 1.5 - 2.25 Gew.-%, bezogen auf das Gesamtgewicht der Summe der Komponenten **A, B** und **C,** beträgt.

Eine derartige Epoxidharz-Zusammensetzung bestehend aus drei voneinander getrennt vorliegenden Komponenten ist dahingehend von Vorteil, dass je nach Anwendungstemperatur, beispielsweise Raumtemperatur oder feuchtkalte Bedingungen bei 8°C und 80% relative Feuchte, die jeweils am besten geeignete gemischte Zusammensetzung erstellt werden kann. So kann beispielsweise durch die ausschliessliche Verwendung der Komponenten **A, B** für eine Anwendung bei Raumtemperatur eine schnelle Aushärtung erreicht werden. Durch das Vorhandensein der getrennt vorliegenden Komponente C wird jedoch sichergestellt, dass im Bedarfsfall durch Zugabe der Komponente **C,** falls während der Verwendung tieferen Temperaturen wie 8° C und 80% relative Feuchte vorliegen sollten, eine hohe Beschleunigung der Shore-D Härteentwicklung und gleichzeitig eine hohe Oberflächenqualität bei geringer Schrumpfneigung der ausgehärteten Zusammensetzung erreicht werden kann. Eine solche Flexibilität der Anwendungsbedingungen in Bezug auf Umgebungstemperatur und Luftfeuchtigkeit, durch Zugabe oder Weglassen der Komponente C, ist für den Endanwender von grossem technischen Nutzen.

Auch bei der Epoxidharz-Zusammensetzung bestehend aus drei voneinander getrennt vorliegenden Komponenten sind als Epoxid-Flüssigharz **EF,** Aminhärter **AM** sowie tertiäres Amin **tAM** der Formel (I) dieselben Ausführungsformen bevorzugt, die bereits vorgehend als bevorzugte Ausführungsformen ausgewiesen wurden.

Weitere in der Epoxidharz-Zusammensetzung möglicherweise enthaltende Bestandteile, wie Verdünner, Reaktivverdünner, Füllstoffe oder Additive wie Netzmittel oder Entlüfter, können vorzugsweise in der Komponenten **A** oder in der Komponente **B** oder in beiden Komponenten vorhanden sein.

Die Komponenten **A, B** und **C** der dreikomponentigen Epoxidharz-Zusammensetzung werden jeweils in einem eigenen Gebinde gelagert. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen:

| | |
|---|---|
| Epoxid-Flüssigharz 1 | Bisphenol-A-Diglycidylether, EEW ca. 187 g/Eq (von Huntsman) |
| Epoxid-Flüssigharz 2 | Epikote^{®} Resin 05447, 1:1 Mischung Bisphenol-A-Diglycidylether und Bisphenol-F-Diglycidylether, EEW ca. 177 g/Eq (von Momentive) |
| Reaktivverdünner 1 | Grilonit epoxide 8, Monoglycidylether von C₁₂- bis C₁₄-Alkoholen, EEW ca. 294 g/Eq (von Huntsman) |
| Reaktivverdünner 2 | Modifier DW 1765 BD, Paraffinwachs dispergiert in Bisphenol-A-Diglycidylether und Monoglycidylether von C₁₂-bis C₁₄-Alkoholen, EEW ca. 729 g/Eq (von Huntsman) |
| Verdünner | RUETASOLV DI, Diisopropylnaphthalin, Rütgers |
| Anti-Sed. | Anti-Sedimentationsadditiv, BENTONE SD 2, Elementis |
| Entlüfter | BYK-054, BYK |
| Quarzmehl 1 | DORSILIT 10000 MIPUR |
| Quarzmehl 2 | SIKRON M 500 |
| 1,3-BAC | 1,3-Bis(aminomethyl)cyclohexan, AHEW 35.5 g/Eq (von Mitsubishi Gas Chemical) |
| K54 | Ancamine K54, Mischung von 2,4,6-tris[(dimethylamino)methyl]phenol (>85 %) und Bis[(dimethylamino)methyl]phenol (<15 %) |

### Herstellung von Epoxidharz-Zusammensetzungen:

### Beispiele 1 bis 54:

Zur Herstellung der Zusammensetzung Z1 wurden die in der Tabelle 1 angegebenen Inhaltsstoffe der Harz-Komponente in den angegebenen Mengen (in Gewichtsteilen) vermischt und unter Ausschluss von Feuchtigkeit aufbewahrt.

Ebenso wurden die in der Tabelle 1 angegebenen Inhaltsstoffe der Härter-Komponente aufbewahrt.

Für jedes der Beispiele 1 - 54 wurde die in der Tabelle 1 dargestellte Zusammensetzung Z1 als Grundlage verwendet. Entsprechend der Tabellen 2 bis 8 wurden die dort aufgeführten zusätzlichen Komponenten "K54", "Wasser" und "Diisopropylnaphthalin" in Mengen zugegeben, sodass die Endkonzentration der zusätzlichen Komponenten, bezogen auf das Gesamtgewicht der final erhaltenen Zusammensetzung, die in den Tabellen 2 bis 8 ausgeführten Gewichtsteilen entspricht. So wurde zur Herstellung von Beispiel 1 beispielsweise der Zusammensetzung Z1 soviel "K54" zugegeben, dass die Gesamtmenge an "K54" 3 Gew.-% betrug, bezogen auf das Gesamtgewicht der Zusammensetzung von Beispiel 1.

Zur Herstellung der Beispiele 1 - 54 wurden die Harz-Komponente, die Härter-Komponente und die gegebenenfalls enthaltenen zusätzlichen Komponenten "K54", "Wasser" und "Diisopropylnaphthalin" zu einer homogenen Flüssigkeit verarbeitet und diese unverzüglich gemäss den angegebenen Prüfungsverfahren geprüft.

Die **Shore D** Härte wurde unmittelbar nach dem Vermischen der Komponenten an zylindrischen Prüfkörpern mit einer Dicke von 5 mm nach einer Lagerung im Normklima (23°C/ 50 % Luftfeuchtigkeit, in Tabellen mit "23°C" ausgewiesen), respektive bei 8°C/ 80 % Luftfeuchtigkeit (in Tabellen mit "8°C" ausgewiesen) in den Tabellen angegebenen Zeiten bestimmt.

Der **Aspekt** wurde an der Oberfläche des zylindrischen Prüfkörpers der Shore D Härteprüfung beurteilt. Als "+" wurden ebene, gleichmässige, klare, glänzende Oberflächen ohne Weissfärbungen oder Krater bezeichnet. Als "-" wurden wellige, ungleichmässige Oberflächen mit Flecken oder Krater bezeichnet. Als "+/-" Oberflächen zwischen beiden vorgenannten Bewertungen bezeichnet.

Der **Schrumpf** wurde anhand der Abnahme des Durchmessers des zylindrischen Prüfkörpers der Shore D Härteprüfung beurteilt. Keine von Auge feststellbare Abnahme des Durchmessers wurde mit "+" bewertet, eine geringe Abnahme wurde mit "+/-" beurteilt und eine starke Abnahme wurde mit "-" beurteilt.

**Tabelle 1:**

| **Zusammensetzung Z1** | | **Gew.-%** |
|---|---|---|
| **Harz-Komp.** : | | |
| | Epoxid-Flüssigharz 1 | 22.4 |
| | Epoxid-Flüssigharz 2 | 15.0 |
| | Reaktivverdünner 1 | 6.1 |
| | Reaktivverdünner 2 | 1.3 |
| | Verdünner | 1.4 |
| | Anti-Sed. | 0.3 |
| | Entlüfter | 1.0 |
| | Quarzmehl 1 | 19.4 |
| | Quarzmehl 2 | 25.6 |
| **Härter-Komp.** : | | |
| | 1,3-BAC | 7.5 |
| Summe | | 100 |

**Tabelle 2**

| 8°C | | | Shore D nach Zeit | | | | | | | |
|---|---|---|---|---|---|---|---|---|---|---|
| | K54 (Gew.-%) | Wasser (Gew.-%) | 1h | 2h | 3h | 4h | 5h | 6h | 24h | 3d |
| Ex.1 | 6 | - | | | | | | | n.d. | 73 |
| Ex.2 | - | 6 | | | | | | | n.d. | 73 |
| Ex.3 | 3 | 3 | | | | 34 | 53 | 59 | n.d. | 76 |

**Tabelle 3**

| 23°C | | | Shore D nach Zeit | | | | | | | |
|---|---|---|---|---|---|---|---|---|---|---|
| | K54 (Gew.-%) | Wasser (Gew.-%) | 1h | 2h | 3h | 4h | 5h | 6h | 24h | 3d |
| Ex.4 | - | - | | | | | | n.d. | 77 | n.d. |
| Ex.5 | 3 | - | | | | | 37 | n.d. | 78 | n.d. |
| Ex.6 | - | 3 | 36 | 63 | 66 | 73 | n.d. | n.d. | 76.0 | n.d. |
| Ex.7 | 1.5 | 1.5 | 56 | 71 | 75 | n.d. | n.d. | n.d. | 77 | n.d. |

**Tabelle 4**

| 8°C | | | Shore D nach Zeit | | | | | | | | | Aspekt | Schrumpf |
|---|---|---|---|---|---|---|---|---|---|---|---|---|---|
| | K54 (Gew.-%) | Wasser (Gew.-%) | 1h | 2h | 3h | 4h | 5h | 6h | 7h | 8h | 24h | | |
| Ex.8 | - | - | | | | | | | | | 51 | + | + |
| Ex.9 | 1.75 | 1.75 | | | | | | 40.1 | 55 | 65 | 79 | + | + |
| Ex.10 | 2 | 2 | | | | weich | 23 | 51.7 | 58.4 | 68 | 79 | + | + |
| Ex.11 | 2.25 | 2.25 | | | | 21.9 | 35.1 | 55 | 54.6 | 67 | 78 | + | + |
| Ex.12 | 2.5 | 2.5 | | | | 31.7 | 49.6 | 56.2 | 63.4 | 71 | 77 | + | - |
| Ex.13 | 3 | 3 | | 9.1 | 32.8 | 57.5 | 56.6 | 62.7 | 66.3 | 73 | 79 | + | - |
| Ex.14 | 3.5 | 3.5 | | 9.1 | 38.8 | 57.8 | 60.3 | 65.3 | 62.9 | 72 | 77 | +/- | - |
| Ex.15 | 4 | 4 | | 9.1 | 44.1 | 43.8 | 59.9 | 64.3 | 65.7 | 72 | 77 | - | - |
| Ex.16 | 4.5 | 4.5 | weich | 45.9 | 57.5 | 63.5 | 64.6 | 66.4 | 66.3 | 71 | 78 | - | - |
| Ex.17 | 5 | 5 | 12.5 | 48.4 | 57.6 | 63.6 | 63.8 | 67.7 | 68.2 | 74 | 77 | - | - |

**Tabelle 5**

| 23°C | | | Shore D nach Zeit | | | | | | | | | |
|---|---|---|---|---|---|---|---|---|---|---|---|---|
| | K54 (Gew.-%) | Wasser (Gew.-%) | 0.5h | 1h | 2h | 3h | 4h | 5h | 6h | 7h | 8h | 24h |
| Ex.18 | 0.05 | 0.05 | | | | | | weich | 30.6 | 53.3 | 69 | 70 |
| Ex.19 | 0.1 | 0.1 | | | | | | weich | 38.4 | 57.3 | 65 | 70.9 |
| Ex.20 | 0.25 | 0.25 | | | | | | 21.4 | 58.3 | 65.6 | 70 | 74.4 |
| Ex.21 | 0.5 | 0.5 | | | | | 26.1 | 59.9 | 68.1 | 70.8 | 72 | 72.3 |
| Ex.22 | 0.75 | 0.75 | | | | | 59.4 | 69.8 | 69 | 72.1 | 73 | 74.5 |
| Ex.23 | 1 | 1 | | | 14 | 60.3 | 69.3 | 71.1 | 71.4 | 73 | 73 | 73.9 |
| Ex.24 | 1.25 | 1.25 | | | 35.2 | 60.7 | 70.1 | 71 | 73 | 72.8 | 75 | 73 |
| Ex.25 | 1.5 | 1.5 | | | 59.4 | 68 | 71 | 72.5 | 73.5 | 73.3 | 75 | 74.7 |
| Ex.26 | 2 | 2 | | 29.8 | 68.2 | 71.5 | 74 | 73 | 74.2 | 72.5 | 75 | 74.9 |
| Ex.27 | 2.5 | 2.5 | | 61.4 | 69.3 | 71.2 | 71.2 | 73.3 | 74.4 | 74.5 | 73 | 74.3 |
| Ex.28 | 3 | 3 | 21.7 | 66.4 | 71.4 | 71.6 | 72.4 | 72.4 | 71.8 | 71.5 | 71.6 | 74.6 |
| Ex.29 | 3.5 | 3.5 | 40.7 | 68.5 | 72.1 | 73.3 | 72.5 | 74.3 | 72.9 | 73.5 | 70.6 | 75.1 |
| Ex.30 | 4 | 4 | 62.1 | 70.1 | 72.3 | 71.7 | 74.4 | 73.6 | 74.5 | 74.2 | 74.9 | 75.9 |
| Ex.31 | 4.5 | 4.5 | 62.4 | 70.8 | 70.5 | 71.2 | 72 | 71.9 | 73.9 | 74.4 | 73.7 | 75.4 |
| Ex.32 | 5 | 5 | 48.3 | 73 | 74.5 | 74 | 73.1 | 73.8 | 74.3 | 74.5 | 73.5 | 74.9 |

**Tabelle 6**

| 23°C | | | | Shore D nach Zeit | | | | | |
|---|---|---|---|---|---|---|---|---|---|
| | K54 (Gew.-%) | Wasser (Gew.-%) | Diisopropylnaphthalin (Gew.-%) | 1h | 2h | 3h | 4h | 5h | 6h |
| Ex.33 | 1.5 | 1.5 | 1.4 | 56 | 71 | 75 | 73 | 75 | n.d. |
| Ex.34 | 1.5 | 1.5 | 9.1 | 0 | 50 | 68 | 72 | 72 | 73 |
| Ex.35 | 1.5 | 1.5 | 10.6 | 0 | 31 | 64 | 68 | 70 | 71 |
| Ex.36 | 1.5 | 1.5 | 12.6 | 0 | 16 | 59 | 66 | 67 | 68 |

**Tabelle 7**

| 23°C | | | Shore D nach Zeit | | | | | | | |
|---|---|---|---|---|---|---|---|---|---|---|
| | K54 (Gew.-%) | Wasser (Gew.-%) | 0.5h | 1h | 2h | 3h | 4h | 5h | 6h | 24h |
| Ex.37 | 0.5 | 2.5 | 49.6 | 66.2 | 74 | 78.1 | 77.7 | 82 | 83.7 | 83.8 |
| Ex.38 | 0.6 | 2.4 | 45.8 | 67.5 | 70 | 79.5 | 80.4 | 81 | 81.5 | 82.9 |
| Ex.39 | 0.75 | 2.25 | 55.5 | 69.2 | 77 | 79.2 | 79.2 | 81 | 82.2 | 83.7 |
| Ex.40 | 1 | 2 | 28.6 | 69.2 | 75 | 78.1 | 78.9 | 79 | 80.3 | 83 |
| Ex.41 | 1.5 | 1.5 | | | 67.3 | 76.4 | 76.8 | 80.4 | 79.1 | 83 |
| Ex.42 | 2 | 1 | | | 57 | 77.6 | 81 | 82 | 82.9 | 83.5 |
| Ex.43 | 2.25 | 0.75 | | | 16 | 74.5 | 79.3 | 80 | 82.7 | 84.3 |
| Ex.44 | 2.4 | 0.6 | | | | 67 | 67 | 76 | 82.3 | 85 |
| Ex.45 | 2.5 | 0.5 | | | | 64.3 | 80.3 | 82 | 83.2 | 83.5 |

**Tabelle 8**

| 8°C | | | Shore D nach Zeit | | | | | | | | | |
|---|---|---|---|---|---|---|---|---|---|---|---|---|
| | K54 (Gew.-%) | Wasser (Gew.-%) | 0.5h | 1h | 2h | 3h | 4h | 5h | 6h | 7h | 8h | 24h |
| Ex.46 | 1.16 | 5.84 | | | | | 9.5 | 25.3 | 34.5 | 45.4 | 60 | 71.1 |
| Ex.47 | 1.4 | 5.6 | | | | | 10.9 | 40.9 | 49.7 | 56.7 | 58 | 74.5 |
| Ex.48 | 1.75 | 5.25 | | | | | 13.2 | 42.7 | 50.4 | 59.5 | 68 | 76.2 |
| Ex.49 | 2.3 | 4.7 | | | | | 22.7 | 55.2 | n.d. | n.d. | 72 | 77.3 |
| Ex.50 | 3.5 | 3.5 | | | | 8.3 | 32.6 | 52 | 57.7 | 65.5 | 76 | 77 |
| Ex.51 | 4.7 | 2.3 | | | | 18.3 | 50.8 | 66 | 71.3 | 74.1 | 76 | 74.7 |
| Ex.52 | 5.25 | 1.75 | | | | 6.7 | 29.8 | 60.9 | 65.1 | 69 | 73 | 74.5 |
| Ex.53 | 5.6 | 1.4 | | | | | 9.3 | 50.4 | 60.5 | 66.1 | 72 | 75 |
| Ex.54 | 5.84 | 1.16 | | | | | | 29.2 | 50.6 | 58.5 | 72 | 73.3 |

## Patentansprüche

1. Epoxidharz-Zusammensetzung umfassend:
- mindestens ein Epoxid-Flüssigharz **EF**;
- mindestens einen Aminhärter **AM**;
- 1.0 - 6.0 Gew.-%, bezogen auf das Gesamtgewicht der Epoxidharz-Zusammensetzung, von mindestens einem tertiären Amin **tAM** der Formel 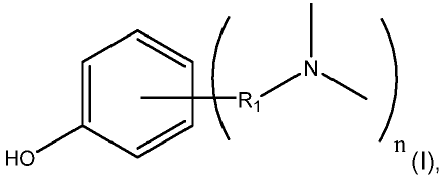 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
- 1.0 - 6.0 Gew.-% Wasser, bezogen auf das Gesamtgewicht der Epoxidharz-Zusammensetzung.

2. Epoxidharz-Zusammensetzung gemäss Anspruch 1, **dadurch gekennzeichnet, dass** in der Epoxidharz-Zusammensetzung das Verhältnis der Anzahl von gegenüber Epoxidgruppen reaktiven Gruppen gegenüber der Anzahl Epoxidgruppen im Bereich von 0.7 bis 1.2, insbesondere 0.8 bis 1.0, insbesondere bevorzugt 0.90 bis 0.98, liegt.

3. Zusammensetzung gemäss einem der vorgehenden Ansprüche, **dadurch gekennzeichnet, dass** die Zusammensetzung 3.5 - 6.0 Gew.-%, insbesondere 4.5 - 5.5 Gew.-%, bevorzugt 4.75 - 5.25 Gew.-%, von mindestens einem tertiären Amin **tAM** der Formel (I) aufweist, bezogen auf das Gesamtgewicht der Epoxidharz-Zusammensetzung.

4. Zusammensetzung gemäss einem der vorgehenden Ansprüche, **dadurch gekennzeichnet, dass** die Zusammensetzung 1.0 - 3.5 Gew.-%, insbesondere 1.25 - 2.5 Gew.-%, bevorzugt 1.5 - 2.25 Gew.-%, Wasser aufweist, bezogen auf das Gesamtgewicht der Epoxidharz-Zusammensetzung.

5. Zusammensetzung gemäss einem der vorgehenden Ansprüche, **dadurch gekennzeichnet, dass** das Gewichtsverhältnis von tertiären Amin **tAM** der Formel (I) zu Wasser (**tAM** / Wasser) von 0.5 - 4, vorzugsweise von 1 - 3, insbesondere von 2 - 3, beträgt.

6. Zusammensetzung gemäss einem der vorgehenden Ansprüche, **dadurch gekennzeichnet, dass** das Gesamtgewicht der Summe vom tertiären Amin **tAM** der Formel (I) und Wasser (**tAM** + Wasser) von 3.5 - 8.0 Gew.-%, insbesondere 4.5 - 7.25 Gew.-%, bevorzugt 5.5 - 6.75 Gew.-%, beträgt, bezogen auf das Gesamtgewicht der Epoxidharz-Zusammensetzung.

7. Zusammensetzung gemäss einem der vorgehenden Ansprüche, **dadurch gekennzeichnet, dass** der mindestens eine Aminhärter **AM** ausgewählt aus ist der Liste bestehend aus
- aliphatische, cycloaliphatische oder arylaliphatische primäre Di- oder Triamine,
- sekundäre Aminogruppen aufweisende Polyamine,
- Bis(aminomethyl)cyclohexan und
- Addukte von diesen Aminen mit Epoxiden oder Epoxidharzen, insbesondere Addukte mit Diepoxiden oder Monoepoxiden, besonders bevorzugt handelt es sich um Bis(aminomethyl)cyclohexan.

8. Zusammensetzung gemäss einem der vorgehenden Ansprüche, **dadurch gekennzeichnet, dass** die Zusammensetzung weniger als 10 Gew.-%, insbesondere weniger als 7.5 Gew.-%, bevorzugt weniger als 5 Gew.-%, bezogen auf das Gesamtgewicht der Epoxidharz-Zusammensetzung, Verdünner enthält.

9. Zusammensetzung gemäss einem der vorgehenden Ansprüche, **dadurch gekennzeichnet, dass** die Zusammensetzung zusätzlich 2 - 15 Gew.-%, vorzugsweise 5 - 10 Gew.-%, insbesondere 6 - 8 Gew.-%, bezogen auf das Gesamtgewicht der Epoxidharz-Zusammensetzung, von mindestens einem Epoxidgruppen-haltigen Reaktivverdünner enthält.

10. Zusammensetzung gemäss einem der vorgehenden Ansprüche, **dadurch gekennzeichnet, dass** die Zusammensetzung zusätzlich 20 - 50 Gew.-%, vorzugsweise 30 - 45 Gew.-%, insbesondere 35 - 40 Gew.-%, bezogen auf das Gesamtgewicht der Epoxidharz-Zusammensetzung, von mindestens einem Füllstoff enthält.

11. Ausgehärtete Zusammensetzung erhalten aus der Aushärtung der Epoxidharz-Zusammensetzung gemäss einem der Ansprüche 1 - 10 nach dem Vermischen der Komponenten.

12. Verwendung der Zusammensetzung gemäss einem der Ansprüche 1 - 10 als Bodenbeschichtung.

13. Verwendung gemäss Anspruch 12, **dadurch gekennzeichnet, dass** die Bodenbeschichtung Bestandteil eines Bodenbelags ist, umfassend
- gegebenenfalls eine Grundierung,
- gegebenenfalls eine Egalisierungsschicht,
- eine oder mehrere Lagen einer Basisschicht, welche gegebenenfalls mit Quarzsand abgestreut ist,
- und gegebenenfalls eine Versiegelung.

14. Verfahren umfassend die Schritte
a) Bereitstellen einer zweikomponentigen Epoxidharz-Zusammensetzung bestehend aus
- einer Harz-Komponente **A** enthaltend mindestens ein Epoxid-Flüssigharz **EF,** und
- einer Härter-Komponente **B** enthaltend mindestens einen Aminhärter **AM** sowie 0.5 - 2 Gew.-%, bezogen auf das Gesamtgewicht der Epoxidharz-Zusammensetzung, von mindestens einem tertiären Amin **tAM** der Formel 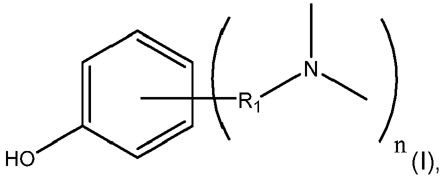
wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
wobei die zweikomponentige Epoxidharz-Zusammensetzung weiter 0.75 - 3 Gew.-% Wasser, bezogen auf das Gesamtgewicht der zweikomponentige Epoxidharz-Zusammensetzung, aufweist und wobei die Harz-Komponente **A** und die Härter-Komponente **B** getrennt voneinander vorliegen;
b) Mischen der Harz-Komponente **A** und der Härter-Komponente **B** der zweikomponentigen Epoxidharz-Zusammensetzung unter Zugabe von einer Komponente **C** enthaltend mindestens ein tertiäres Amin **tAM** der Formel (I) und gegebenenfalls Wasser,
wobei die Summe des mit der Komponente **C** zugegebenen und des in der zweikomponentigen Epoxidharz-Zusammensetzung bereits enthaltenen tertiären Amins **tAM** 1 - 6 Gew.-%, bezogen auf das Gesamtgewicht der erhaltenen Epoxidharz-Zusammensetzung, beträgt; und
wobei die Summe des mit der Komponente C gegebenenfalls zugegebenen und des in der zweikomponentigen Epoxidharz-Zusammensetzung bereits enthaltenen Wassers 1 - 6 Gew.-%, bezogen auf das Gesamtgewicht der erhaltenen Epoxidharz-Zusammensetzung, beträgt; und
c) Applizieren der erhaltenen Epoxidharz-Zusammensetzung bei einer Temperatur von 18 - 0 °C, insbesondere 12 - 4 °C, bevorzugt 10 - 6 °C, auf einen Untergrund.

15. Verfahren gemäss Anspruch 14, **dadurch gekennzeichnet, dass** in Schritt a) die zweikomponentige Epoxidharz-Zusammensetzung in der Härter-Komponente **B** 0.8 - 1.6 Gew.-%, bevorzugt 1.0 - 1.4 Gew.-%, von dem mindestens einen tertiären Amin **tAM** der Formel (I) aufweist, bezogen auf das Gesamtgewicht der zweikomponentigen Epoxidharz-Zusammensetzung, und die zweikomponentige Epoxidharz-Zusammensetzung weiter 1.4 - 2.2 Gew.-%, bevorzugt 1.6 - 2.0 Gew.-%, Wasser aufweist, bezogen auf das Gesamtgewicht der zweikomponentigen Epoxidharz-Zusammensetzung.

16. Verfahren gemäss Anspruch 14 oder 15, **dadurch gekennzeichnet, dass** es sich bei der in Schritt b) erhaltenen Epoxidharz-Zusammensetzung um eine Epoxidharz-Zusammensetzung gemäss Anspruch 1 bis 10 handelt.

17. Epoxidharz-Zusammensetzung bestehend aus drei voneinander getrennt vorliegenden Komponenten, bestehend aus
- einer Harz-Komponente **A** enthaltend mindestens ein Epoxid-Flüssigharz **EF,** und
- einer Härter-Komponente **B** enthaltend mindestens einen Aminhärter **AM** sowie 0.5 - 2 Gew.-%, bezogen auf das Gesamtgewicht der Epoxidharz-Zusammensetzung, von mindestens einem tertiären Amin **tAM** der Formel 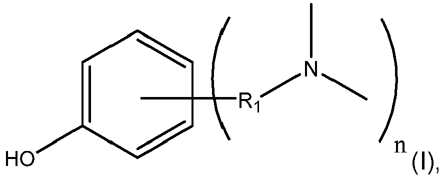 wobei R₁ für eine Alkylengruppe mit 1 - 20 C-Atomen, welche gegebenenfalls substituiert ist und gegebenenfalls Hetereoatome aufweist, steht und n für einen Wert von 1 - 3 steht;
- einer Komponente **C** enthaltend mindestens ein tertiäres Amin **tAM** der Formel (I) und gegebenenfalls Wasser;
wobei die Summe des in den Komponenten **A, B** und **C** enthaltenen tertiären Amins **tAM** 1 - 6 Gew.-%, bezogen auf das Gesamtgewicht der Summe der Komponenten **A, B** und **C**, beträgt;
und wobei die Summe des in den Komponenten **A, B** und **C** enthaltenen Wassers 1 - 6 Gew.-%, bezogen auf das Gesamtgewicht der Summe der Komponenten **A, B** und **C**, beträgt.

18. Epoxidharz-Zusammensetzung gemäss Anspruch 17, **dadurch gekennzeichnet, dass** die Härter-Komponente **B** 0.8 - 1.6 Gew.-%, bevorzugt 1.0 - 1.4 Gew.-%, von dem mindestens einen tertiären Amin **tAM** der Formel (I) aufweist, bezogen auf das Gesamtgewicht der Härter-Komponente **B,** und die Härter-Komponente **B** weiter 1.4 - 2.2 Gew.-%, bevorzugt 1.6 - 2.0 Gew.-%, Wasser aufweist, bezogen auf das Gesamtgewicht der Härter-Komponente **B.**

19. Epoxidharz-Zusammensetzung gemäss Anspruch 17 oder 18, **dadurch gekennzeichnet, dass** die Summe des in den Komponenten **A, B** und C enthaltenen tertiären Amins **tAM** der Formel (I) 4.5 - 5.5 Gew.-%, bevorzugt 4.75 - 5.25 Gew.-%, bezogen auf das Gesamtgewicht der Summe der Komponenten **A, B** und **C**, beträgt; und wobei die Summe des in den Komponenten **A, B** und **C** enthaltenen Wassers 1.25 - 2.5 Gew.-%, bevorzugt 1.5 - 2.25 Gew.-%, bezogen auf das Gesamtgewicht der Summe der Komponenten **A, B** und **C**, beträgt.
